# EUROPÄISCHE PATENTSCHRIFT

(11) **EP 2 668 254 B1**
(45) Veröffentlichungstag und Bekanntmachung des Hinweises auf die Patenterteilung: **26.05.2021**
(21) Anmeldenummer: 12704366.9
(22) Anmeldetag: 27.01.2012
(51) Int. Cl.: C02F 3/02, C02F 103/26, C02F 101/30, C02F 1/66, C02F 1/04, C02F 9/00

(54) **VERFAHREN ZUR AUFBEREITUNG VON PROZESSWASSER AUS EINER ANLAGE ZUR HYDROTHERMALEN KARBONISIERUNG NACHWACHSENDER ROHSTOFFE UND ORGANISCHER RESTSTOFFE**
METHOD FOR TREATING PROCESS WATER FROM A PLANT FOR THE HYDROTHERMAL CARBONISATION OF RENEWABLE RAW MATERIALS AND ORGANIC RESIDUES
PROCÉDÉ DE TRAITEMENT D'UNE EAU DE TRAITEMENT ISSUE D'UNE INSTALLATION DE CARBONISATION HYDROTHERMALE DE MATIÈRES PREMIÈRES RENOUVELABLES ET DE RÉSIDUS ORGANIQUES

(30) Priorität: 28.01.2011 DE 102011009775
(43) Veröffentlichungstag der Anmeldung: 04.12.2013
(73) Patentinhaber: SunCoal Industries GmbH, 14974 Ludwigsfelde (DE)
(72) Erfinder: WITTMANN, Tobias, 10965 Berlin (DE)
(74) Vertreter: Maikowski & Ninnemann Patentanwälte Partnerschaft mbB
(86) Internationale Anmeldenummer: PCT/EP2012/000375
(87) Internationale Veröffentlichungsnummer: WO 2012/100954

(56) Entgegenhaltungen:
- EP-A1- 2 206 688
- DE-A1-102007 062 808
- DE-A1-102009 015 257

## Beschreibung

Die Erfindung betrifft ein Verfahren zur Aufbereitung von Prozesswasser, welches in einer Anlage zur hydrothermalen Karbonisierung (HTC) nachwachsender Rohstoffe und organischer Reststoffe anfällt.

Das Anwendungsgebiet der Erfindung ist die Aufbereitung einer Teilmenge oder der gesamten als Abwasser aus einer HTC-Anlage auszutragenden Menge an Prozesswasser, das bei der Erzeugung von festen Energieträgern oder von Bodenverbesserern aus nachwachsenden Rohstoffen, Reststoffen aus der land-, forst- und nahrungswirtschaftlichen Produktion und organischen Wertstoffen aus der Abfallaufbereitung in einer HTC-Anlage anfällt.

Unter nachwachsender Rohstoffe und organischer Reststoffe oder Biomasse soll vorliegend pflanzliche Biomasse sowie tierische Stoffwechselprodukte verstanden werden, insbesondere nachwachsende Rohstoffe, wie Holz, Holzhackschnitzel, Grünschnitt aus zum Beispiel der Garten-, Park-, und Landschaftspflege, Gras- und Weidenschnitt, Pflanzen, Stroh, Silage, und organische Reststoffe aus der Land- und Forstwirtschaft sowie der Nahrungsmittelindustrie und Entsorgungswirtschaft, sowie auch Torf, Rohbraunkohle, Papier- und Klärschlämme, Trester und dergleichen, die im weiteren auch als Einsatzstoffe bezeichnet werden.

Unter hydrothermaler Karbonisierung (HTC) wird im Weiteren eine Behandlung der Einsatzstoffe in Anwesenheit von flüssigem Wasser bei Temperaturen zwischen etwa 150°C und etwa 300°C verstanden, wobei die Einsatzstoffe im Wesentlichen unter Abspaltung von Wasser und Kohlenstoffdioxid zu einem kohlenstoffreicheren und sauerstoffärmeren Feststoff veredelt werden. Während einer hydrothermalen Karbonisierung sind die Einsatzstoffe vollständig oder teilweise von flüssigem Wasser umhüllt. Der Druck während einer hydrothermalen Karbonisierung entspricht mindestens dem Sattdampfdruck von Wasser bei der gewählten Behandlungstemperatur oder liegt darüber. Die Behandlungstemperatur muss in Abhängigkeit von der Art des Einsatzstoffes eine Mindesthöhe erreichen, wobei diese für zuckerreiche Einsatzstoffe bei mindestens etwa 150°C und bei cellulose-und ligninreichen Einsatzstoffen bei mindestens etwa 180°C liegt. Eine Temperatur von etwa 300°C wird bei einer hydrothermalen Karbonisierung nicht überschritten. Die Dauer einer hydrothermalen Karbonisierung ist abhängig von den gewünschten Eigenschaften der karbonisierten Einsatzstoffe, wie zum Beispiel Kohlenstoffgehalt, Korngröße, Sauerstoffgehalt und kann zwischen etwa 30 Minuten und über 24 Stunden andauern.

Unter HTC-Anlage wird im weiteren eine Anlage zur hydrothermalen Karbonisierung der Einsatzstoffe verstanden, welche aus mehreren Prozessschritten besteht, die in einem räumlichen Zusammenhang miteinander stehen, wobei mindestens eine hydrothermale Karbonisierung, eine Einbringung der Einsatzstoffe in die hydrothermale Karbonisierung und ein Austrag der karbonisierten Einsatzstoffe aus der hydrothermalen Karbonisierung, ggf. eine mechanische Entwässerung der karbonisierten Einsatzstoffe und eine thermische Trocknung der karbonisierten Einsatzstoffe erforderlich sind.

Als Prozesswasser ist im Weiteren das Wasser gemeint, welches während die Einsatzstoffe einer hydrothermalen Karbonisierung unterworfen sind, direkt mit diesen in Kontakt kommt, dadurch mit organischen und anorganischen Stoffen verunreinigt wird und aus der hydrothermalen Karbonisierung entweder zusammen mit den karbonisierten Einsatzstoffen oder separat ausgetragen wird.

Mit Prozessdampf soll im Folgenden verdampftes Prozesswasser bezeichnet werden. Prozessdampf kann zum Beispiel bei einer thermischen Trocknung der karbonisierten Einsatzstoffe, einer Verdampfungskühlung des aus der hydrothermalen Karbonisierung ausgetragenen Prozesswassers und/oder der karbonisierten Einsatzstoffe, in einer Eindampfanlage für Prozesswasser oder während einer hydrothermalen Karbonisierung durch die Exothermie des Karbonisierungsprozesses erzeugt werden.

Als Prozessdampfkondensat wird im Folgenden kondensierter Prozessdampf bezeichnet.

Unter Abwasser, soll im Folgenden die Menge an Prozesswasser und Prozessdampfkondensat verstanden werden, die flüssig aus einer HTC-Anlage ausgetragen wird. Die Menge an Abwasser ergibt sich im Wesentlichen aus der Differenz zwischen der Summe der in die hydrothermale Karbonisierung eingetragenen Menge an Frischwasser und der während der hydrothermalen Karbonisierung von den Einsatzstoffen abgespaltenen Menge an Wasser und der Summe der mit den karbonisierten Einsatzstoffen aus der HTC-Anlage ausgetragenen Menge an Prozesswasser und der als Prozessdampf direkt aus der HTC-Anlage ausgetragenen Menge an Prozesswasser.

Nach dem Stand der Technik ist es vorteilhaft, einen Teil des aus einer hydrothermalen Karbonisierung ausgetragenen Prozesswassers als Kreislaufwasser innerhalb einer HTC-Anlage zu führen und wieder in die hydrothermale Karbonisierung einzubringen. Die Schließung von Prozesswasserkreisläufen innerhalb der HTC-Anlage verändert die aus einer HTC-Anlage in Summe ausgetragene Menge an Abwasser entsprechend der oberen Definition also nicht.

Mit Frischwasser wird im Folgenden Wasser bezeichnet, welches nicht als Kreislaufwasser innerhalb der HTC-Anlage geführt wird, sondern entweder separat oder zusammen mit den Einsatzstoffen in eine hydrothermale Karbonisierung eingebracht wird. Mit Frischwasser wird insbesondere das an den Einsatzstoffen anhaftende Wasser bezeichnet, welches zwangsläufig zusammen mit diesen in die HTC-Anlage eingebracht wird.

Es ist bekannt, dass - auch nach Schließung der internen Prozesswasserkreisläufe - aus einer HTC-Anlage in der Regel Prozesswasser als Abwasser ausgetragen werden muss, da die Summe der mit den Einsatzstoffen in die HTC-Anlage eingetragene Menge an Frischwasser und der während der hydrothermalen Karbonisierung von den Einsatzstoffen abgespaltenen Menge an Wasser größer ist als die Summe des mit den karbonisierten Einsatzstoffen aus der HTC-Anlage ausgetragenen Menge an Prozesswasser und der direkt als Prozessdampf aus der HTC-Anlage ausgetragenen Menge an Prozesswasser.

Aus der DE 10 2009 015 257 A1 ist eine teilweise Verdampfung von Prozesswasser und eine nachfolgende Kondensation des Prozessdampfes bekannt. So werden die bei der Trocknung entstehenden Sattdämpfe gewaschen. Der gewaschene Dampf wird komprimiert, expandiert und kondensiert und dem Prozess wieder zugeführt oder aus dem Prozess ausgeführt.

Bekannt ist, dass das Prozesswasser während einer hydrothermalen Karbonisierung mit wasserlöslichen organischen Stoffen, die z.B. über eine Messung des gesamten organischen Kohlenstoffes (TOC) nachgewiesen werden können, und mit wasserlöslichen anorganischen Bestandteilen der Einsatzstoffe z.B. Salzen, die z.B. über eine Messung der Leitfähigkeit nachgewiesen werden können, verunreinigt wird. Weiterhin ist bekannt, dass Prozessdampf insbesondere mit wasserdampfflüchtigen, organischen Bestandteilen des Prozesswassers verunreinigt ist.

Vorhanden sind wissenschaftliche Grundlagen zur Aufbereitung des als Abwassers aus einer HTC-Anlage ausgetragenen Prozesswassers durch eine anaerobe oder aerobe biologische Behandlung. Weiterhin wurde die Aufbereitung durch Aktivkohlefilter sowie einer Kombination dieser Verfahren untersucht. Darüberhinaus beschreiben DE10 2007 062808 A2 und EP 2 206 688 Aspekte der biologischen Reinigung von Prozesswasser, wie eine Vorbehandlung des Abwassers durch Nassoxidation (EP 2 206 688).

Das Ziel der Erfindung ist die sichere Einhaltung der durch gesetzliche Rahmenbedingungen vorgegeben Grenzwerte für die direkte oder indirekte Einleitung des Abwassers aus einer HTC-Anlage durch Verbesserung des Standes der Technik bei der Aufbereitung zumindest einer Teilmenge des als Abwasser aus einer HTC-Anlage auszutragenden Menge an Prozesswasser aus einer hydrothermalen Karbonisierung der Einsatzstoffe, insbesondere bei schwankender Zusammensetzung der Einsatzstoffe und wechselnden Prozessbedingungen der hydrothermalen Karbonisierung.

Aufgabe der Erfindung ist es, ein vereinfachtes Verfahren zur Aufbereitung des als Abwasser aus einer HTC-Anlage abzuführenden Menge an Prozesswasser zur Verfügung zu stellen, welches sich durch geringe Betriebs- und Investitionskosten auszeichnet und geeignet ist, die Belastung des Abwassers mit organischer und anorganischer Fracht soweit zu reduzieren, dass die gesetzlichen Grenzwerte sicher unterschritten werden, wie sie z.B. in Deutschland durch die Abwasserzweckverbände sowie das Wasserhaushaltsgesetzt vorgegeben werden.

Erfindungsgemäß werden dazu insbesondere
▪ eine Verdampfung von Prozesswasser,
▪ eine Kondensation des Prozessdampfes, sowie
▪ eine übliche biologische Aufbereitung des Prozessdampfkondensats als Teilmenge oder ggf. als Gesamtmenge der aus einer HTC-Anlage ausgetragenen Menge an Abwasser
vorgeschlagen.

Die Aufgabe wird gelöst durch ein Verfahren nach Anspruch 1 zur Aufbereitung von Prozesswasser aus einer Anlage zur hydrothermalen Karbonisierung von Biomasse (HTC-Anlage) als Einsatzstoff, wobei
▪ Prozesswasser der hydrothermalen Karbonisierung teilweise mittels optionaler Verdampfungskühlung und thermischer Trocknung verdampft wird,
▪ der so erhaltene Prozessdampf in einem Wärmetauscher kondensiert wird,
▪ das so erhaltene Prozessdampfkondensat zumindest als Teilmenge eines Abwassers aus der HTC-Anlage ausgetragen wird und
▪ das Abwasser biologisch aufbereitet wird, wobei
   - eine Mindestmenge an Prozesswasser als Abwasser aus der HTC-Anlage ausgetragen wird, wobei die ausgetragene Mindestmenge an Prozesswasser die Mindestmenge ist, die erforderlich ist, um das Ascheschmelzverhalten der karbonisierten Biomasse derart anzuheben, dass eine Erhöhung der Ascheerweichungstemperatur auf mindestens 1000°C erreicht wird, und
   - entweder der Wassergehalt der Biomasse soweit begrenzt wird oder
      die Verdampfungsleistung einer thermischen Trocknung der karbonisierten Biomasse in Dampfatmosphäre soweit erhöht wird,
      so dass das restliche als Abwasser aus der HTC-Anlage auszutragende Prozesswasser in der thermischen Trocknung der karbonisierten Biomasse in Dampfatmosphäre verdampft und kondensiert wird, und das erhaltene Prozessdampfkondensat als Abwasser ausgetragen wird,

Mit dem Verfahren
▪ wird das Prozesswasser zumindest teilweise, z.B. 60% und darüber, verdampft,
▪ wird der so erhaltene Prozessdampf kondensiert, ggf. nach einer Druckerhöhung durch Verdichtung oder einer Druckabsenkung durch Entspannung,
▪ wird das Prozessdampfkondensat aus der vorherigen Stufe zumindest als Teilmenge des Abwassers aus der HTC-Anlage ausgetragen und
▪ wird das Abwasser auf an sich bekannte Art und Weise biologisch aufbereitet, z.B. durch aerobe oder anaerobe Abwasserreinigung, biochemische Oxidation, Belebungsverfahren, Tropf- oder Tauchkörperverfahren, Biofiltrationsverfahren, z.B. mittels Pflanzkläranlagen, unbelüfteten oder belüfteten Abwasserteichanlagen.

Das wesentliche Wirkprinzip der vorliegenden Erfindung liegt in einer intensiven und kostengünstigen Reduktion der organischen Fracht zumindest eines Teils des Abwassers durch die Überführung der überwiegend biologisch gut abbaubaren Bestandteile der organischen Fracht des Prozesswassers in die Dampfphase, der anschließenden Kondensation, vorzugsweise einer im Wesentlichen vollständigen Kondensation, des Prozessdampfes und des so ermöglichten weiteren biologischen Abbaus der organischen Fracht des Prozessdampfkondensats.

Das erfindungsgemäße Verfahren kann bevorzugt ausgestaltet werden indem
▪ der gewonnene Prozessdampf isotherm gewaschen wird, d.h. unter weitestgehender Vermeidung einer Kondensation des Prozessdampfes, und
▪ der pH-Wert des Prozessdampfes in der isothermen Wäsche durch die Zugabe einer Base, vorzugsweise einer anorganischen Base, wie Alkali- und Erdalkalihydroxide, z.B. Natronlauge, Kalilauge, Kalk(milch), etc. auf mindestens 6 erhöht wird.

Durch die erfindungsgemäße isotherme Wäsche des Prozessdampfes bei gleichzeitiger Erhöhung des pH-Wertes, wird die organische Fracht des Prozessdampfes und damit auch des Prozessdampfkondensats weiter reduziert.

Das erfindungsgemäße Verfahren kann weiter bevorzugt vorteilhaft ausgestaltet werden indem
▪ als Base Calciumhydroxid, z.B. als Kalkmilch, zur Erhöhung des pH-Werts des Prozessdampfes in die isotherme Wäsche eingebracht wird und
▪ die Abschlämmung aus der isothermen Wäsche ggf. nach einer Eindickung durch Verdampfung entweder der hydrothermalen Karbonisierung zugeführt oder den karbonisierten Einsatzstoffen vor deren mechanischer Entwässerung zugeschlagen oder der thermischen Trocknung zugeführt wird.

Das Calciumhydroxid kann in fester, suspendierter oder gelöster Form, z.B in Form wässriger Lösungen oder Suspensionen, bevorzugt in Form von Kalkmilch eingesetzt werden.

Durch den erfindungsgemäßen Einsatz von Calciumhydroxid, insbesondere in Form von Kalkmilch zur Erhöhung des pH-Werts des Prozessdampfes in der isothermen Wäsche und der Abführung der in der Abschlämmung des isothermen Wäschers enthaltenen organischen Salze des Kalziums zumindest teilweise zusammen mit den karbonisierten, getrockneten Einsatzstoffen aus der HTC-Anlage, was durch die Einbringung der Abschlämmung in die thermische Trocknung der karbonisierten Einsatzstoffe (entweder direkt oder indirekt zumindest teilweise über die Einbringung der Abschlämmung in die hydrothermale Karbonisierung oder der Zuschlagung zu den karbonisierten Einsatzstoffen vor deren mechanischer Entwässerung) erreicht wird, wird zum einen die Ausbeute an karbonisierten Einsatzstoffen erhöht, zum anderen werden die karbonisierten Einsatzstoffe durch die Zugabe von Kalzium mit einem Zuschlagsstoff versehen, der bei deren Verbrennung SOx-Emissionen reduziert und das Ascheschmelzverhalten positiv beeinflusst. Somit kann durch die erfindungsgemäße Nutzung von Kalkmilch zur Anhebung des pH-Wertes des Prozessdampfes in der isothermen Wäsche gleichzeitig die zur Rauchgasentschwefelung bei der Verbrennung der karbonisierten und getrockneten Einsatzstoffe eingesetzte Menge an Kalk reduziert bzw. ggf. vollständig ersetzt und damit zu einer Verbesserung des Ascheschmelzverhaltens beigetragen werden.

Das erfindungsgemäße Verfahren kann bevorzugt ausgestaltet werden, indem
■ das Prozesswasser zumindest teilweisewährend einer thermischen Trocknung der karbonisierten Einsatzstoffe in Dampfatmosphäre verdampft wird und
■ der so gewonnene Prozessdampf wie oben beschrieben weiter aufbereitet wird.

Unter zumindest teilweise wird in diesem Zusammenhang bevorzugt die Menge an Prozesswasser verstanden, die im Wesentlichen dem Anteil entspricht, der nach der mechanischen Entwässerung noch an den karbonisierten Einsatzstoffen anhaftet abzüglich des Anteils, der nach der thermischen Trocknung noch an den karbonisierten Einsatzstoffen anhaftet.

Das wesentliche Wirkprinzip dieser bevorzugten Ausgestaltung der vorliegenden Erfindung liegt in der Ausführung der thermischen Trocknung der karbonisierten Einsatzstoffe in der Art, dass das dort verdampfte Prozesswasser, im Wesentlichen als reiner Prozessdampf, der lediglich durch im Wesentlichen wasserdampfflüchtige organische Verbindungen und geringfügige Ausgasungen der trocknenden karbonisierten Einsatzstoffe verunreinigt ist, gewonnen wird. Die Verbesserung ergibt sich durch die Möglichkeit, die thermische Trocknung der karbonisierten Einsatzstoffe zur Erzeugung von Prozessdampf zu nutzen, der so der erfindungsgemäßen Aufbereitung zugänglich gemacht wird, verbunden mit dem Wegfall einer separaten Aufbereitung des in der thermischen Trocknung ggf. im Gemisch mit Luft anfallenden Prozessdampfes, hinsichtlich dessen die Grenzwerte für die Abgabe von Abgas an die Atmosphäre gelten (z.B. in Deutschland vorgegeben durch die technische Anleitung zur Reinhaltung der Luft (TA-Luft)).

Das erfindungsgemäße Verfahren kann weiter bevorzugt ausgestaltet werden, indem
▪ die Verdampfung des Prozesswassers zumindest teilweise bei der Verdampfungskühlung des aus der hydrothermalen Karbonisierung ausgetragenen Prozesswassers und/oder der karbonisierten Einsatzstoffe erfolgt und
▪ der so gewonnene Prozessdampf wie oben beschrieben weiter aufbereitet wird.

Durch die erfindungsgemäße Verdampfung von Prozesswasser bei der Verdampfungskühlung des aus der hydrothermalen Karbonisierung ausgetragenen Prozesswassers und/oder der karbonisierten Einsatzstoffe wird Abwärme der hydrothermalen Karbonisierung zur Verdampfung des Prozesswassers genutzt und damit eine Verbesserung der Wirtschaftlichkeit des erfindungsgemäßen Verfahren erreicht.

Das erfindungsgemäße Verfahren kann weiter bevorzugt ausgestaltet werden, indem
▪ die Verdampfung des Prozesswassers zumindest teilweise durch die bei der hydrothermalen Karbonisierung frei werdende Reaktionswärme erfolgt und
▪ der so gewonnene Prozessdampf wie oben beschrieben weiter aufbereitet wird.

Durch die erfindungsgemäße Verdampfung von Prozesswasser durch die bei der hydrothermalen Karbonisierung freiwerdenden Reaktionswärme wird Abwärme der hydrothermalen Karbonisierung zur Verdampfung des Prozesswassers genutzt und damit eine Verbesserung der Wirtschaftlichkeit des erfindungsgemäßen Verfahren erreicht.

Das erfindungsgemäße Verfahren kann darüberhinaus weiter bevorzugt ausgestaltet werden, indem
▪ der Wassergehalt der Einsatzstoffe soweit begrenzt wird (z.B. durch eine Vorentwässerung oder ein Aussortieren von Einsatzstoffen) und/oder der Wassergehalt der karbonisierten Einsatzstoffe in einer mechanischen Entwässerung so eingestellt wird,
   ▪ dass die Menge an Abwasser, die als Kondensat des in der thermischen Trocknung der karbonisierten Einsatzstoffe in Dampfatmosphäre gewonnen wird, soweit erhöht wird,
      ▪ dass nur noch soviel Prozesswasser ohne vorherige Verdampfung als Abwasser aus der HTC-Anlage ausgetragen wird, wie erforderlich ist, um das Ascheschmelzverhalten der trockenen karbonisierten Einsatzstoffe auf die Anforderungen der Verbrennungs- bzw. Vergasungstechnologie einzustellen, in denen sie eingesetzt werden sollen, und
▪ der Prozessdampf der bei der der thermischen Trocknung der karbonisierten Einsatzstoffe sowie optional bei der Verdampfungskühlung des aus der hydrothermalen Karbonisierung ausgetragenen Prozesswassers sowie der karbonisierten Einsatzstoffe entsteht, wie oben beschrieben behandelt wird.

Das Abwasser wird dabei zusätzlich optional bei der Verdampfungskühlung des aus der hydrothermalen Karbonisierung ausgetragenen Prozesswassers sowie der karbonisierten Einsatzstoffe und ggf. aus durch die Reaktionswärme der hydrothermalen Karbonisierung verdampftem Prozesswasser gewonnen.

Durch die erfindungsgemäße Begrenzung des Wassergehalts der Einsatzstoffe oder der Nutzung der thermischen Trocknung in Dampfatmosphäre zur Verdampfung von zusätzlichem Prozesswasser kann der Anteil des Prozessdampfkondensats am Abwasser der HTC-Anlage weiter erhöht werden und dadurch die Abwasserqualität weiter gesteigert werden, wobei durch die direkte Abfuhr einer Mindestmenge von Prozesswasser als Abwasser aus der HTC-Anlage sichergestellt wird, dass die Anforderungen, die die Verbrennungs- bzw. Vergasungstechnologie, in der die karbonisierten Einsatzstoffe eingesetzte werden, hinsichtlich des Ascheschmelzverhaltens an diese stellt, eingehalten werden und diese störungsfrei verbrannt bzw. vergast werden können.

Mit dem Ascheschmelzverhalten sind die nach DIN 51730 ermittelten Kennzahlen, insbesondere die für den Betrieb von Trockenfeuerungen und Vergasern mit Trockenascheabzug relevante Sintertemperatur und Erweichungstemperatur gemeint. Im Rahmen der dieser Erfindung zugrundeliegenden Experimente wurde festgestellt dass die das Ascheschmelzverhalten kennzeichnenden Temperaturen der karbonisierten Einsatzstoffe mitunter deutlich höher liegen als die der nicht karbonisierten Einsatzstoffe. Weiterhin wurde im Rahmen der dieser Erfindung zugrundeliegenden Experimente festgestellt dass diese Erhöhung nur dann erreicht werden kann, wenn eine Mindestmenge an Prozesswasser als Abwasser aus der HTC-Anlage ausgetragen wird. Werden die getrockneten karbonisierten Einsatzstoffe in Trockenfeuerungen und Vergasern mit Trockenascheabzug, die in der Regel bei etwa 700 °C - etwa 1.100°C betrieben werden, eingesetzt, so ist es erforderlich, dass die Sintertemperatur der Asche so hoch ist, dass keine Anbackungen in der Brennkammer entstehen und die Ascheerweichungstemperatur im Regelfall nicht erreicht wird. Liegen für die jeweilige Feuerung, bzw. den jeweiligen Vergaser keine Erfahrungswerte vor, so kann angesetzt werden, dass die Sintertemperatur mindestens etwa 900 °C und die Erweichungstemperatur mindestens etwa 1.100 °C betragen sollte. Diese Werte können in Abhängigkeit der genutzten Technologie darüber oder darunter liegen. Erfindungsgemäß ist, wenn
(i) im Wesentlichen die Mindestmenge an Prozesswasser als Abwasser aus der HTC-Anlage ausgetragen wird, die erforderlich ist, um das Ascheschmelzverhalten der karbonisierten Einsatzstoffe auf die angestrebten Werte anzuheben, vorzugsweise ist dabei eine Erhöhung der Ascheerweichungstemperatur auf mindestens 1.000°C, bevorzugt mindestens 1.100 °C angestrebt, und
(ii) entweder der Wassergehalt der Einsatzstoffe soweit begrenzt wird oder die Verdampfungsleistung der thermischen Trocknung in Dampfatmosphäre soweit erhöht wird, dass das restliche als Abwasser aus der HTC-Anlage auszutragende Prozesswasser in der thermischen Trocknung der karbonisierten Einsatzstoffe in die Dampfatmosphäre verdampft wird, welches optional zusätzlich bei der Verdampfungskühlung des aus der hydrothermalen Karbonisierung ausgetragenen Prozesswassers sowie der karbonisierten Einsatzstoffe gewonnen wird, und wobei optional die Verdampfung durch die Reaktionswärme der hydrothermalen Karbonisierung erfolgt.

Eine weitere bevorzugte Ausgestaltung des erfindungsgemäßen Verfahrens kann erreicht werden, indem
▪ im Wesentlichen soviel zusätzliches Prozessdampfkondensat durch die Verdampfung von Prozesswasser in einer Eindampfanlage und dessen anschließender Kondensation (ggf. nach einer Kompression) gewonnen wird und als Abwasser aus der HTC-Anlage ausgetragen wird, wie sich aus der Differenz zwischen der Menge an Abwasser und der Menge an Prozessdampfkondensat aus der thermischen Trocknung der karbonisierten Einsatzstoffe in Dampfatmosphäre, und optional aus der Verdampfungskühlung des aus aus der Prozeßstufe der (eigentlichen) hydrothermalen Karbonisierung ausgetragenen Prozesswassers sowie der karbonisierten Einsatzstoffe und ergibt, und
▪ von dem Konzentrat (Rückstand) des in der Eindampfanlage verdampften Prozesswassers soviel als Abwasser oder als Abfall aus der HTC-Anlage ausgetragen wird, wie erforderlich ist, um das Ascheschmelzverhalten der trockenen karbonisierten Einsatzstoffe auf die Anforderungen der Verbrennungs- bzw. Vergasungstechnologie einzustellen, in denen sie eingesetzt werden sollen und
▪ ggf. darüber hinaus vorhandenes Konzentrat (Rückstand) wieder in die Prozeßstufe der hydrothermalen Karbonisierung eingebracht oder den karbonisierten Einsatzstoffen vor deren mechanischer Entwässerung zugeschlagen oder der thermische Trocknung der karbonisierten Einsatzstoffe zugeführt wird.

Die genannte Einstellung erfolgt vorteilhaft durch regelmäßige Kontrollmessungen des Ascheerweichungsverhaltens der karbonisierten Einsatzstoffe, wobei bei Unterschreitung der geforderten bzw. angestrebten Mindesttemperaturen die Menge an Konzentrat die als Abwasser oder Abfall aus der HTC-Anlage ausgetragen wird, erhöht wird bzw. bei deutlicher Überschreitung derselben die Menge ggf. auch reduziert werden kann.

Die erfindungsgemäße im Wesentlichen komplette Verdampfung sowie anschließende Kondensation der Menge an Prozesswasser, die als Abwasser aus der HTC-Anlage ausgetragen werden muss, ermöglicht es, die Abwasserqualität weiter zu erhöhen, ohne das Vorgaben an den Wassergehalt der Einsatzstoffe gemacht werden müssen und/oder die Verdampfungsleistung in der thermischen Trocknung in Dampfatmosphäre gesteigert werden muss, sondern die zusätzliche Verdampfung von Prozesswasser in einer speziell für diese Aufgabenstellung ausgelegten Eindampfanlage erfolgen kann. Die Eindampfanlage kann zum Beispiel als Zwangsumlaufverdampfer ausgeführt sein. Hierdurch kann gleichzeitig gewährleistet werden, dass das Ascheschmelzverhalten der karbonisierten Einsatzstoffe nicht nachteilig beeinflusst wird, da das Konzentrat aus der Eindampfanlage ganz oder teilweise entweder als Abfall oder in flüssiger Form als Teilmenge des Abwassers aus der HTC-Anlage ausgetragen werden kann und durch die Einbringung des verbleibenden Restes des Konzentrats in die thermische Trocknung der karbonisierten Einsatzstoffe (entweder direkt oder indirekt zumindest teilweise über die Wiedereinbringung des Konzentrats in die Prozeßstufe der (eigentlichen) hydrothermalen Karbonisierung oder der Zuschlagung zu den karbonisierten Einsatzstoffen vor deren mechanischer Entwässerung) die Ausbeute an trockenen karbonisierten Einsatzstoffen gesteigert werden kann. Wird ein Teil oder das gesamte Konzentrat aus der Eindampfanlage als Abwasser aus der HTC-Anlage ausgetragen, so reduziert sich die Menge an Prozessdampfkondensat, welche gewonnen und als Abwasser aus der HTC-Anlage ausgetragen wird entsprechend.

Das erfindungsgemäße Verfahren kann darüber hinaus weiter bevorzugt ausgestaltet werden, indem
▪ die Eindampfanlage im Unterdruck betrieben wird, und
▪ die Beheizung der Eindampfanlage zumindest teilweise durch die Kondensation von Prozessdampf, der bei der thermischen Trocknung der karbonisierten Einsatzstoffe in Dampfatmosphäre gewonnen wird, erfolgt.

Durch diese erfindungsgemäße Ausgestaltung kann die Abwärme der Trocknung direkt zur Aufbereitung des Prozesswassers nach dem erfindungsgemäßen Verfahren eingesetzt werden und dadurch die Energieeffizienz erhöht werden.

Die Erfindung bezieht sich auch auf sämtliche Kombinationen von bevorzugten Ausgestaltungen, soweit diese sich nicht gegenseitig ausschließen. Die Angaben "etwa" oder "ca." in Verbindung mit einer Zahlenangabe bedeuten, dass zumindest um 10 % höhere oder niedrigere Werte oder um 5 % höhere oder niedrigere Werte und in jedem Fall um 1 % höhere oder niedrigere Werte eingeschlossen sind.

Unter "im Wesentlichen" soll verstanden werden, daß keine Einschränkung auf die ideale bzw. exakte Bedeutung des jeweiligen Merkmals erfolgt, sondern dass neben der genannten Bedeutung des Merkmals auch solche Abweichungen mitumfasst sind, die nach wie vor die Verwirklichung der hauptsächlichen oder überwiegenden (technischen) Bedeutung des Merkmals gewährleisten. D.h. die Abweichungen dürfen sich nicht substantiell oder wesentlich auf die technische Wirkung des Merkmals auswirken, wie beispielsweise geringe Beimengungen zu Hauptbestandteilen einer Mischung, Mess- oder Fehlertoleranzen oder geringe Abweichungen von Zahlenwerten.

Die Erfindung soll anhand der folgenden Beispiele erläutert werden, ohne jedoch auf die speziell beschriebenen Ausführungsformen beschränkt zu sein. Soweit nichts anderes angegeben ist oder sich aus dem Zusammenhang zwingend anders ergibt, beziehen sich Prozentangaben auf das Gewicht, im Zweifel auf das Gesamtgewicht der Mischung.

### Ausführungsbeispiel

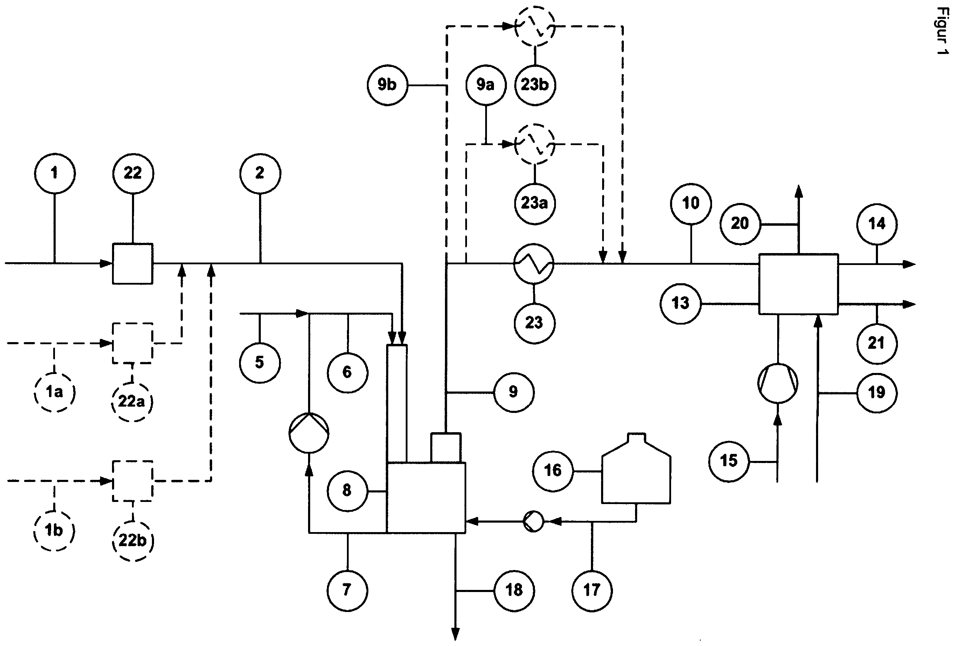

Die Erfindung wird mithilfe von **Figur 1** an einem Ausführungsbeispiel wie folgt beschrieben:
Aus einer hydrothermalen Karbonisierung ausgetragenes Prozesswasser wird über Leitung (1) einem Verdampfungsaggregat (22) zugeführt, in welchem das Prozesswasser verdampft wird und als Prozessdampf wieder abgeführt wird. Aus dem Verdampfungsaggregat können auch weitere Stoffe, die zusammen mit dem Prozesswasser über (1) dem Verdampfungsaggregat zugeführt werden und nicht mit dem Prozessdampf abgeführt werden, separat abgeführt werden (nicht dargestellt). Das Verdampfungsaggregat wird durch ein Heizmedium (z.B. Dampf) beheizt, welches sich im Verdampfungsaggregat abkühlt und/oder kondensiert und aus diesem wieder abgeführt wird (nicht dargestellt). Der so gewonnene Prozessdampf verlässt das Verdampfungsaggregat und wird über Leitung (2) dem isothermen Wäscher (8) zugeführt, welcher im Wesentlichen bei einer Temperatur betrieben wird, die der Sattdampftemperatur entspricht, welche mit dem Druck, der auf der Verdampfungsseite des Verdampfungsaggregats herrscht, korrespondiert. Isotherm bedeutet vorliegend, dass der Prozessdampf im Wäscher im Wesentlichen nicht kondensiert, sondern diesen in Form von Sattdampf wieder verlässt. Weiteres Prozesswasser (1a, 1b, ...) kann über zusätzliche Verdampfungsaggregate (22a, 22b, ...) verdampft werden und zusammen mit dem in (22) gewonnenen Prozessdampf über Leitung (2) dem isothermen Wäscher (8) zugeführt werden. Dem Wäscher wird über Leitung (17) eine Base (z.B. Kalkmilch) zugeführt, welche einem Vorlagebehälter (16) entnommen wird. Durch die geregelte Zugabe der Base wird der pH-Wert des Prozessdampfes auf einen Wert größer 6 eingestellt. Über Leitung (7) wird dem Wäscher ein Teil des Waschwassers entnommen und über Leitung (6) wieder zurückgeführt. Die im Wäscher vom Prozessdampf abgetrennte organische Fracht des Prozessdampfes sammelt sich am Boden des Wäschers und wird als Abschlämmung über Leitung (18) aus dem Wäscher ausgetragen. Über Leitung (5) wird dem Wäscher frisches Waschwasser zugeführt. Der über Leitung (9) aus dem Wäscher abgeführte Prozessdampf wird in einem Kondensator (23) kondensiert und als Prozessdampfkondensat über Leitung (10) einer aeroben biologischen Aufbereitung (13) zugeführt. Im Kondensator wird ein zugeführtes Kühlmedium (z.B. Kühlwasser oder zu verdampfendes Prozesswasser) erwärmt und/oder verdampft und aus diesem wieder abgeführt (nicht dargestellt). Der Prozessdampf (9) kann auch in Teilströme (9a, 9b, ...) aufgeteilt werden, die dann in weiteren Kondensatoren (23a, 23b, ...) kondensiert werden und mit dem in Kondensator (23) kondensierten Teilstrom zusammen über Leitung (10) der biologischen Aufbereitung zugeführt werden. In die biologische Aufbereitung wird über Leitung (15) Luft eingebracht, welche zusammen mit den gasförmigen Abbauprodukten (im Wesentlichen CO2) der organischen Fracht des Prozessdampfkondensats über Leitung (20) die biologische Aufbereitung wieder verlässt. Über Leitung (19) werden der biologischen Aufbereitung Nährstoffe, insbesondere Phosphor und Nitrat, zugeführt. Das biologisch aufbereitete Prozessdampfkondensat verlässt über Leitung (14) die biologische Aufbereitung und kann indirekt oder direkt in die öffentliche Kanalisationeingeleitet werden. Weiterhin wird der biologischen Aufbereitung Klärschlamm über Leitung (21) entnommen.

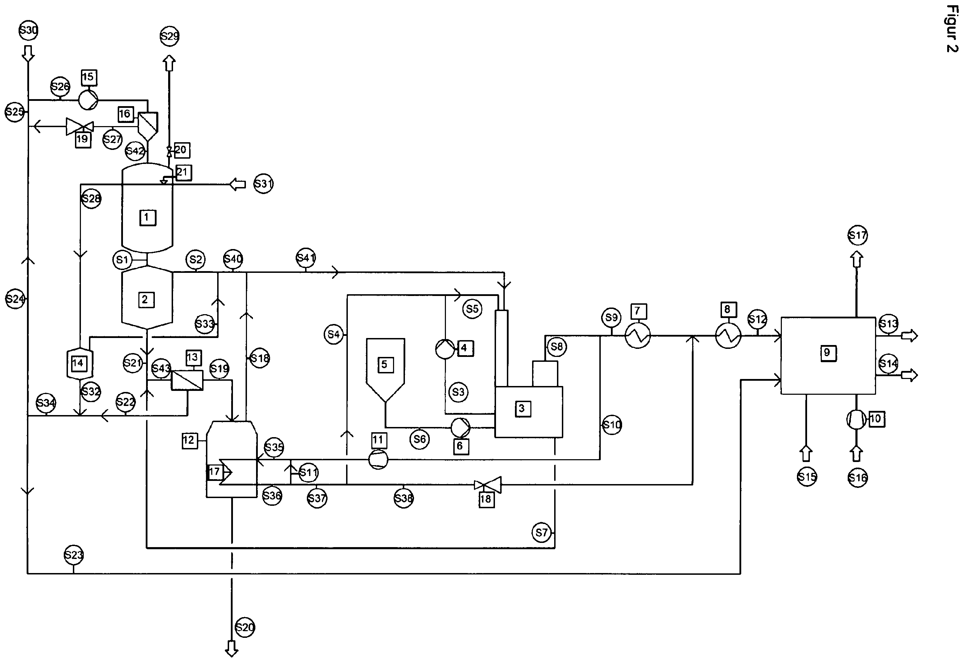

Die Erfindung wird mithilfe von **Figur 2** an einem Ausführungsbeispiel wie folgt beschrieben:
2,2 t/h Holzhackschnitzel mit 55% Wassergehalt (das heißt eine 1,00 t/h trockene Holzhackschnitzel sowie eine 1,20 t/h Frischwasser) werden als Einsatzstoff über (S30) in die HTC-Anlage eingetragen, mit 7,80 t/h Prozesswasser (S25) vermischt, über (S26) einer Pumpe (15) zugeführt, die den Strom mit 25 bar Druck beaufschlagt und fördert. Von diesem Strom werden in einer Wasserabtrennung (16) 6,7 t/h im Wesentlichen Prozesswasser über (S27) abgetrennt, in einer Drossel (19) entspannt mit 1,1 t/h Prozesswasser (S24) vermischt und über (S25) den Einsatzstoffen wieder zugeführt.

Die Einsatzstoffe werden zusammen mit dem nicht in (16) abgetrennten Wasser (1 t/h trockene Holzhackschnitzel und 2,3 t/h Frisch- und Prozesswasser) über (S42) in die hydrothermale Karbonisierung eingebracht, die im Wesentlichen aus einem Reaktor (1) besteht. In dem Reaktor befindet sich ein Wasserbad (21), in das die Einsatzstoffe eingebracht werden und unter Abspaltung von 0,1 t/h Wasser und 0,1 t/h Permanentgas, im Wesentlichen Kohlendioxid, zu 0,8 t/h karbonisierten Einsatzstoffen veredelt werden.

Der Füllstand des Wasserbades (21) wird durch die Entnahmen von 0,5 t/h Prozesswasser über (S28) kontrolliert, welches einer Einrichtung zur Verdampfungskühlung (14) zugeführt wird. Entstehende Permanentgase (0,1 t/h) werden geregelt mit Ventil (20) über (S29) aus der HTC-Anlage ausgetragen. Das über (S28) entnommene Prozesswasser wird durch die Erzeugung von 0,1 t/h Prozessdampf (S33) auf etwa 100°C rückgekühlt und auf Umgebungsdruck entspannt. Der karbonisierte Einsatzstoff bildet ein Sediment mit einem Trockenstoffgehalt von etwa 30% (0,8 t/h Feststoff und 1,9 t/h Wasser) am Boden des Reaktors und wird über (S1) aus diesem ausgetragen und über eine Verdampfungskühlung (2) unter Abgabe von 0,44 t/h Prozessdampf (S2) auf etwa 100°C rückgekühlt und auf Umgebungsdruck entspannt. Die rückgekühlten karbonisierten Einsatzstoffe (S21) (0,8 t/h karbonisierte Einsatzstoffe und 1,46 t/h Prozesswasser) werden vermischt mit 0,16 t/h Abschlämmung (S7) aus der isothermen Wäsche (3) über (S43) einer mechanischen Entwässerung (13) zugeführt. Durch die Vermischung der Abschlämmung aus dem isothermen Wäscher mit den karbonisierten Einsatzstoffen werden die organischen Salze des Kalziums zumindest teilweise über (S19) der thermischen Trocknung (12) zugeführt und mit den karbonisierten, getrockneten Einsatzstoffen über (S20) aus der HTC-Anlage ausgetragen.

In der mechanischen Entwässerung (13) werden die karbonisierten Einsatzstoffe auf einen Trockenstoffgehalt von 50% entwässert, wobei 0,82 t/h im Wesentlichen Prozesswasser über (S22) abgetrennt, mit 0,4 t/h rückgekühltem Prozesswasser (S32) vermischt und teilweise über (S23) (0,12 t/h) der aeroben biologischen Aufbereitung (9) zugeführt und teilweise über (S24) (1,1 t/h) als Kreislaufwasser innerhalb der HTC-Anlage genutzt werden. Der mechanisch entwässerte karbonisierte Einsatzstoff von 1,6 t/h wird über (S19) einer Trocknung in Dampfatmosphäre (12) zugeführt. Die Trocknung in Dampfatmosphäre wird indirekt mit einem Wärmetauscher (17) beheizt in dem 0,8 t/h Prozessdampf (S35) kondensieren und als Prozessdampfkondensat über (S36) wieder ausgetragen werden. Während der Trocknung werden 0,73 t/h Prozesswasser verdampft und als Prozessdampf über (S18) aus dem Trockner in Dampfatmosphäre ausgetragen und zusammen mit 0,54 t/h Prozessdampf (S40), der einmal bei der Verdampfungskühlung der karbonisierten Einsatzstoffe sowie des mit diesen aus der hydrothermalen Karbonisierung ausgetragenen Prozesswassers (S2) und bei der Verdampfungskühlung des separat aus der hydrothermalen Karbonisierung ausgetragenen Prozesswassers (S33) entsteht, über (S41) (1,27 t/h) einem isothermen Wäscher (3) zugeführt. Die getrockneten karbonisierten Einsatzstoffe (0,87 t/h mit 8% Wassergehalt) werden über (S20) aus der HTC-Anlage abgeführt.

Der pH-Wert des Prozessdampfes (S41) wird im isothermen Wäscher unter Zugabe von 0,03 t/h Kalkmilch (S6), die aus einer Kalkmilchvorlage (5) über eine Pumpe (6) entnommen wird, auf 6 angehoben. Von dem so vorgereinigten 1,27 t/h Prozessdampf (S8) wird ein Teilstrom (S10) mit 0,68 t/h in einem Verdichter (11) auf 5 bar verdichtet, unter Zugabe von 0,12 t/h Prozessdampfkondensat über (S11) auf Sattdampfbedingungen zurückgekühlt und über (S35) zur Beheizung des Trockners in Dampfatmosphäre (12) im Wärmetauscher (17) kondensiert. Die so gewonnenen 0,8 t/h Prozessdampfkondensat (S36) werden nach Abzug der 0,12 t/h zur Rückkühlung des verdichteten Prozessdampfes über (S11) und nach Abzug der erforderlichen 0,13 t/h Waschwassers, das über (S4) in den isothermen Wäscher (3) eingebracht wird, über (S38) (0,55 t/h) nach einer Entspannung in (18) und ggf. Kondensation der bei der Entspannung entstehenden Flashdämpfe und einer Rückkühlung auf unter 30°C in (208) über (S12) der biologischen Aufbereitung (9) zugeführt. Der nicht über (S10) dem Verdichter zugeführte Teilstrom (S9) des vorgereinigten Prozessdampfes (S8) in Höhe von 0,59 t/h wird in einem Wärmetauscher (7) kondensiert und ggf. nach Rückkühlung in (8) zusammen mit (S38) über (S12) der biologischen Aufbereitung (9) zugeführt.

In der biologischen Aufbereitung wird die organische Fracht des Prozessdampfkondensats (S12) und des Prozesswassers (S23) durch die Zugabe von Luft (S16) die über den Kompressor (10) gefördert wird zu im Wesentlichen CO₂ abgebaut, welches zusammen mit der Luft die biologische Aufbereitung über (S17) verlässt. Über (S15) Nährstoffe wie Phosphor und Stickstoff in die biologische Aufbereitung eingebracht. Das Abwasser verlässt über (S13) die biologische Aufbereitung und wird direkt eingeleitet. Über (S14) wird Klärschlamm aus der biologischen Aufbereitung abgeführt.

Durch die erfindungsgemäße Verfahrensführung in diesem Beispiel wird erreicht, dass von den insgesamt 1,26 t/h Abwasser 1,14 t/h (ca. 90%) durch das erfindungsgemäße Verfahren aufbereitet werden und lediglich 0,12 t/h (ca. 10%) direkt als Prozesswasser ausgetragen werden. Durch die erfindungsgemäße Aufbereitung eines Teils des Prozesswasser sowie dessen Abfuhr als Abwasser aus der HTC-Anlage wird die organische Belastung des so aufbereiteten Prozesswassers in Höhe von 20.000 mg/l TOC (total organic carbon) durch die Verdampfung um ca. 70% auf 6.000 mg/l, durch die Erhöhung des pH-Werts in der isothermen Wäsche um 70% auf 1,800 mg/l und in der biologischen Aufbereitung um 90% auf 180 mg/l reduziert. Die erfindungsgemäße Aufbereitung des Prozesswassers, insbesondere die Verdampfung, erfolgt in diesem Beispiel vorteilhaft ohne zusätzlichen Energieeinsatz, da der Prozessdampf bei der Verdampfungskühlung des aus der hydrothermalen Karbonisierung ausgetragenen Prozesswassers sowie der karbonisierten Einsatzstoffe und in einer thermischen Trocknung der karbonisierten Einsatzstoffe in Dampfatmosphäre gewonnen wird. Weiterhin vorteilhaft wird den trockenen, karbonisierten Einsatzstoffen ein Teil der Abschlämmung aus dem isothermen Wäscher zugeschlagen, wodurch deren Ascheschmelzverhalten verbessert wird. Weiterhin vorteilhaft werden 10% des Prozesswassers als Abwasser aus der HTC-Anlage abgeführt und damit wasserlösliche Bestandteile der Asche der Einsatzstoffe aus dem Prozess abgeführt und dadurch das Ascheschmelzverhalten ebenfalls positiv beeinflusst.

Alle Werte in den vorangegangenen Ausführungsbeispiele sind gerundet und als ca. Werte zu betrachten.

| | **Stoffstrom** | **Feststoff** | **Wasser** | **Gas / Dampf** | **Gesant** |
|---|---|---|---|---|---|
| S1 | karbonisierter Einsatzstoff; Prozesswasser | 0,8 | 1,9 | 0 | 2,7 |
| S2 | Prozessdampf | 0 | 0 | 0,44 | 0,44 |
| S4 | Waschwasser | 0 | 0,13 | 0 | 0,13 |
| S6 | Kalkmilch | 0 | 0,03 | 0 | 0,03 |
| S7 | Abschlämmung | 0 | 0,16 | 0 | 0,16 |
| S8 | Prozessdampf | 0 | 0 | 1,27 | 1,27 |
| S9 | Prozessdampfkondensat | 0 | 0 | 0,59 | 0,59 |
| S10 | Prozessdampf | 0 | 0 | 0,68 | 0,68 |
| S11 | Prozessdampfkondensat | 0 | 0,12 | 0 | 0,12 |
| S12 | Prozessdampfkondensat | 0 | 1,14 | 0 | 1,14 |
| S18 | Prozessdampf | 0 | 0 | 0,73 | 0,73 |
| S19 | karbonisierter Einsatzstoff; Prozesswasser | 0,8 | 0,8 | 0 | 1,6 |
| S20 | karbonisierter Einsatzstoff; Prozesswasser | 0,8 | 0,07 | 0 | 0,87 |
| S21 | karbonisierter Einsatzstoff; Prozesswasser | 0,8 | 1,46 | 0 | 2,26 |
| S22 | Prozesswasser | 0 | 0,82 | 0 | 0,82 |
| S23 | Prozesswasser | 0 | 0,12 | 0 | 0,12 |
| S24 | Prozesswasser | 0 | 1,1 | 0 | 1,1 |
| S25 | Prozesswasser | 0 | 7,8 | 0 | 7,8 |
| S26 | Einsatzstoff; Frischwasser; Prozesswasser | 1 | 9 | 0 | 10 |
| S27 | Prozesswasser | 0 | 6,7 | 0 | 6,7 |
| S28 | Prozesswasser | 0 | 0,5 | 0 | 0,5 |
| S29 | Permanentgas | 0 | 0 | 0,1 | 0,1 |
| S30 | Einsatzstoff; Frischwasser | 1 | 1,2 | 0 | 2,2 |
| S32 | Prozesswasser | 0 | 0,4 | 0 | 0,4 |
| S33 | Prozessdampf | 0 | 0 | 0,1 | 0,1 |
| S34 | Prozesswasser | 0 | 1,22 | 0 | 1,22 |
| S35 | Prozessdampf | 0 | 0 | 0,8 | 0,8 |
| S36 | Prozessdampfkondensat | 0 | 0,8 | 0 | 0,8 |
| S37 | Prozessdampfkondensat | 0 | 0,68 | 0 | 0,68 |
| S38 | Prozessdampfkondensat / Prozesswasser | 0 | 0,55 | 0 | 0,55 |
| S40 | Prozessdampf | 0 | 0 | 0,54 | 0,54 |
| S41 | Prozessdampf | 0 | 0 | 1,27 | 1,27 |
| S42 | Einsatzstoff; Frischwasser; Prozesswasser | 1 | 2,3 | 0 | 3,3 |
| S43 | karbonisierter Einsatzstoff; Prozesswasser | 0,8 | 1,62 | 0 | 2,42 |

### Bezugszeichenliste

Fig.1
   1 Leitung (Prozesswasser)
   1a Weiteres Prozesswasser
   1b Weiteres Prozesswasser
   2 Leitung (Prozessdampf)
   5 Leitung (Waschwasser)
   6 Leitung (Waschwasser)
   7 Leitung (Waschwasser)
   8 (isothermer) Wäscher
   9 Leitung (Prozessdampf)
   9a Teilströme (Prozessdampf)
   9b Teilströme (Prozessdampf)
   10 Leitung (Prozessdampfkondensat)
   13 (aerobe) biologische Aufbereitung
   14 Leitung (Prozessdampfkondensat, aufbereitet)
   15 Leitung (Luft)
   16 Vorlagebehälter
   17 Leitung (Base)
   18 Leitung (Abschlämmung)
   19 Leitung (Nährstoffe)
   20 Leitung (Luft, Abbauprodukte)
   21 Leitung (Klärschlamm)
   22 Verdampfungsaggregat
   22a zusätzliche Verdampfungsaggregate
   22b zusätzliche Verdampfungsaggregate
   23 Kondensator
   23a weitere Kondensatoren
   23b weitere Kondensatoren
Fig.2
   S1 karbonisierter Einsatzstoff; Prozesswasser
   S2 Prozessdampf
   S4 Waschwasser
   S6 Kalkmilch
   S7 Abschlämmung
   S8 Prozessdampf
   S9 Prozessdampfkondensat
   S10 Prozessdampf
   S11 Prozessdampfkondensat
   S12 Prozessdampfkondensat
   S18 Prozessdampf
   S19 karbonisierter Einsatzstoff; Prozesswasser
   S20 karbonisierter Einsatzstoff; Prozesswasser
   S21 karbonisierter Einsatzstoff; Prozesswasser
   S22 Prozesswasser
   S23 Prozesswasser
   S24 Prozesswasser
   S25 Prozesswasser
   S26 Einsatzstoff, Frischwasser, Prozesswasser
   S27 Prozesswasser
   S28 Prozesswasser
   S29 Permanentgas (hauptsächlich CO₂, Spuren CO, H₂)
   S30 Einsatzstoff, Prozesswasser
   S32 Prozesswasser
   S33 Prozessdampf
   S34 Prozesswasser
   S35 Prozessdampf
   S36 Prozessdampfkondensat
   S37 Prozessdampfkondensat
   S38 Prozessdampfkondensat, Prozesswasser
   S40 Prozessdampf
   S41 Prozessdampf
   S42 Einsatzstoff, Frischwasser, Prozesswasser
   S43 Einsatzstoff, Frischwasser, Prozesswasser
   1 Reaktor
   2 Verdampfungskühler
   3 isotherme Wäsche
   5 Kalkmilchvorlage
   6 Pumpe
   8 Rückkühlung
   9 (aerobe) biologische Aufbereitung
   10 Gebläse
   11 Verdichter
   12 thermische Trocknung / Trockner in Dampfatmosphäre
   13 (mechanische) Entwässerung
   14 Wärmetauscher /Verdampfungskühlung
   15 Pumpe
   16 Wärmetauscher/Wasserabtrennung
   17 Wärmetauscher
   18 Entspannung
   19 Drossel
   20 Ventil
   21 Wasserbad

## Patentansprüche

1. Verfahren zur Aufbereitung von Abwasser einer Anlage zur hydrothermalen Karbonisierung von Biomasse (HTC-Anlage), wobei
▪ Prozesswasser der hydrothermalen Karbonisierung (1) teilweise mittels optionaler Verdampfungskühlung (2, 14) und thermischer Trocknung (12) verdampft wird,
▪ der so erhaltene Prozessdampf (S33, S2, S18) in einem Wärmetauscher (7, 17) kondensiert wird,
▪ das so erhaltene Prozessdampfkondensat (S12) zumindest als Teilmenge eines Abwassers aus der HTC-Anlage ausgetragen wird und
▪ das Abwasser biologisch aufbereitet wird (9),
**dadurch gekennzeichnet, dass**
- eine Mindestmenge an Prozesswasser (S32, S22) als Abwasser (S23) aus der HTC-Anlage ausgetragen wird, wobei die ausgetragene Mindestmenge an Prozesswasser (S32, S22) die Mindestmenge ist, die erforderlich ist, um das Ascheschmelzverhalten der karbonisierten Biomasse derart anzuheben, dass eine Erhöhung der Ascheerweichungstemperatur auf mindestens 1000°C erreicht wird,
und
- entweder der Wassergehalt der Biomasse soweit begrenzt wird
oder
die Verdampfungsleistung einer thermischen Trocknung (12) der karbonisierten Biomasse in Dampfatmosphäre soweit erhöht wird,
so dass das restliche als Abwasser (S12) aus der HTC-Anlage auszutragende Prozesswasser in der thermischen Trocknung (12) der karbonisierten Biomasse in Dampfatmosphäre verdampft und kondensiert wird, und das erhaltene Prozessdampfkondensat als Abwasser (S12) ausgetragen wird,

2. Verfahren nach einem oder mehreren der vorherigen Ansprüche, **dadurch gekennzeichnet, dass** die Kondensation des Prozessdampfes (S33, S2, S18) nach einer Druckerhöhung durch Verdichtung oder einer Druckabsenkung durch Entspannung erfolgt.

3. Verfahren nach Anspruch 2, **dadurch gekennzeichnet, dass,** wobei der Prozessdampf bei der Druckerhöhung oder der Druckabsenkung im Wesentlichen vollständig kondensiert wird.

4. Verfahren nach einem oder mehreren der vorherigen Ansprüche, **dadurch gekennzeichnet, dass**
▪ der Prozessdampf isotherm gewaschen wird, und
▪ der pH-Wert des Prozessdampfes in der isothermen Wäsche (3) durch die Zugabe einer Base auf mindestens 6 erhöht wird.

5. Verfahren nach Anspruch 4, **dadurch gekennzeichnet, dass**
▪ als Base Kalkmilch zur Erhöhung des pH-Werts des Prozessdampfes in die isotherme Wäsche (3) eingebracht wird und
▪ die Abschlämmung des isothermen Wäschers (3) entweder der hydrothermalen Karbonisierung (1) zugeführt oder der karbonisierten Biomasse (S1) vor deren mechanischer Entwässerung (S13) zugeschlagen oder der thermischen Trocknung (12) zugeführt wird.

6. Verfahren nach einem oder mehreren der vorherigen Ansprüche, **dadurch gekennzeichnet, dass**
▪ eine Eindampfanlage (12) der HTC-Anlage im Unterdruck betrieben wird, und
▪ die Beheizung der Eindampfanlage (12) zumindest teilweise durch die Kondensation von Prozessdampf (S18) der bei der thermischen Trocknung der karbonisierten Biomasse (S19) in Dampfatmosphäre gewonnen wird erfolgt.

7. Verfahren nach Anspruch 1, **dadurch gekennzeichnet, dass** eine Mindestmenge an Prozesswasser (S32, S22) als Abwasser aus der HTC-Anlage ausgetragen wird, die erforderlich ist, um das Ascheschmelzverhalten der karbonisierten Biomasse derart anzuheben, dass eine Erhöhung der Ascheerweichungstemperatur auf mindestens 1100°C erreicht wird.

## Claims

1. A method for treating waste water of a plant for the hydrothermal carbonization of biomass (HTC plant), wherein
▪ process water of the hydrothermal carbonization (1) is partly evaporated by means of optional evaporative cooling (2, 14) and thermal drying (12),
▪ the obtained process steam (S33, S2, S18) is condensed in a heat exchanger (7, 17),
▪ the obtained process steam condensate (S12) is discharged from the HTC plant at least as a partial quantity of waste water, and
▪ the waste water is biologically treated (9),
**characterized in that**
- a minimum quantity of process water (S32, S22) is discharged from the HTC plant as waste water (S23), wherein the discharged minimum quantity of process water (S32, S22) is the minimum quantity required to raise the ash melting behavior of the carbonized biomass to such an extent that an increase of the ash softening temperature to at least 1000°C is achieved, and
- either the water content of the biomass is limited to such an extent
or
the evaporative capacity of a thermal drying (12) of the carbonized biomass in a steam atmosphere is increased to such an extent
that the remaining process water to be discharged from the HTC plant as waste water (S12) is evaporated and condensed in the thermal drying (12) of the carbonized biomass in a steam atmosphere, and the obtained process steam condensate is discharged as waste water (S12).

2. The method according to one or more of the previous claims, **characterized in that** the condensation of the process steam (S33, S2, S18) is effected by compression after an increase in pressure or by expansion after a decrease in pressure.

3. The method according to claim 2, **characterized in that** the process steam is substantially completely condensed during the increase in pressure or the decrease in pressure.

4. The method according to one or more of the previous claims, **characterized in that**
▪ the process steam is washed isothermally, and
▪ in the isothermal washing stage (3), the pH value of the process steam is increased to at least 6 by adding a base.

5. The method according to claim 4, **characterized in that**
▪ as a base, lime milk is introduced into the isothermal washing stage (3) to increase the pH value of the process steam, and
▪ the sludge of the isothermal scrubber (3) either is supplied to the hydrothermal carbonization (1) or admixed to the carbonized biomass (S1) before mechanically dewatering the same (S13) or is supplied to the thermal drying (12).

6. The method according to one or more of the previous claims, **characterized in that**
▪ an evaporation unit (12) of the HTC plant is operated under vacuum, and
▪ heating of the evaporation unit (12) is at least partly effected by the condensation of process steam (S18) obtained during the thermal drying of the carbonized biomass (S19) in a steam atmosphere.

7. The method according to claim 1, **characterized in that** a minimum quantity of process water (S32, S22) is discharged from the HTC plant as waste water, which is required to raise the ash melting behavior of the carbonized biomass to such an extent that an increase of the ash softening temperature to at least 1100°C is achieved.

## Revendications

1. Procédé pour le traitement d'eau usée d'une installation pour la carbonisation hydrothermique de biomasse (installation HTC), dans lequel
▪ l'eau de traitement de la carbonisation hydrothermique (1) est partiellement évaporée au moyen d'un refroidissement par évaporation (2, 14) et d'un séchage thermique (12) optionnels,
▪ la vapeur de traitement (S33, S2, S18) ainsi obtenue est condensée dans un échangeur de chaleur (7, 17),
▪ le condensat de vapeur de traitement (S12) ainsi obtenu est déchargé de l'installation HTC au moins en tant que quantité partielle d'une eau usée, et
▪ l'eau usée est traitée biologiquement (9),
**caractérisé en ce que**
- une quantité minimale d'eau de traitement (S32, S22) est déchargée en tant qu'eau usée (S23) de l'installation HTC, la quantité minimale déchargée d'eau de traitement (S32, S22) étant la quantité minimale requise pour augmenter le comportement à la fusion de cendres de la biomasse carbonisée de telle sorte qu'une augmentation de la température de ramollissement de cendres à au moins 1000°C soit atteinte,
et
- soit la teneur en eau de la biomasse est limitée dans la mesure où
ou
la puissance évaporatrice d'un séchage thermique (12) de la biomasse carbonisée dans une atmosphère de vapeur est augmentée dans la mesure où,
l'eau de traitement résiduelle à décharger en tant qu'eau usée (S12) de l'installation HTC est évaporée et condensée dans le séchage thermique (12) de la biomasse carbonisée dans une atmosphère de vapeur, et le condensat de vapeur de traitement obtenu est déchargé en tant qu'eau usée (S12).

2. Procédé selon l'une ou plusieurs des revendications précédentes, **caractérisé en ce que** la condensation de la vapeur de traitement (S33, S2, S18) est effectuée après une augmentation de pression par compression ou une diminution de pression par détente.

3. Procédé selon la revendication 2, **caractérisé en ce que** la vapeur de traitement est sensiblement complètement condensée pendant l'augmentation de pression ou la diminution de pression.

4. Procédé selon l'une ou plusieurs des revendications précédentes, **caractérisé en ce que**
▪ la vapeur de traitement est soumise à un lavage isotherme, et
▪ le pH de la vapeur de traitement dans le lavage isotherme (3) est porté à au moins 6 par l'addition d'une base.

5. Procédé selon la revendication 4, **caractérisé en ce que**
▪ du lait de chaux est introduit dans le lavage isotherme (3) en tant que base pour augmenter le pH de la vapeur de traitement, et
▪ la boue de l'épurateur isotherme (3) est soit alimentée à la carbonisation hydrothermique (1), soit ajoutée à la biomasse carbonisée (S1) avant sa déshydratation mécanique (S13), soit alimentée au séchage thermique (12).

6. Procédé selon l'une ou plusieurs des revendications précédentes, **caractérisé en ce que**
▪ une unité d'évaporation (12) de l'installation HTC fonctionne sous vide, et
▪ le chauffage de l'unité d'évaporation (12) est au moins partiellement réalisé par la condensation de vapeur de traitement (S18) obtenue pendant le séchage thermique de la biomasse carbonisée (S19) dans une atmosphère de vapeur.

7. Procédé selon la revendication 1, **caractérisé en ce qu'**une quantité minimale d'eau de traitement (S32, S22) est déchargée de l'installation HTC en tant qu'eau usée, ce qui est nécessaire pour augmenter le comportement à la fusion de cendres de la biomasse carbonisée de telle sorte qu'une augmentation de la température de ramollissement de cendres à au moins 1100°C soit atteinte.
